# FASCICULE DE BREVET EUROPEEN

(11) **EP 2 999 074 B1**
(45) Date de publication et mention de la délivrance du brevet: **08.09.2021**
(21) Numéro de dépôt: 15186004.6
(22) Date de dépôt: 21.09.2015
(51) Int. Cl.: H02G 15/18, H02G 1/14

(54) **ENSEMBLE POUR RECOUVRIR À ENSERREMENT UN ÉLÉMENT ALLONGÉ AVEC UN MANCHON ÉLASTIQUE DE PROTECTION**
EINHEIT ZUR UMMANTELUNG EINES LÄNGLICHEN ELEMENTS MIT EINER ELASTISCHEN SCHUTZHÜLLE
UNIT FOR TIGHTLY COVERING AN ELONGATE ELEMENT WITH A RESILIENT PROTECTIVE SLEEVE

(30) Priorité: 22.09.2014 FR 1458928
(43) Date de publication de la demande: 23.03.2016
(73) Titulaire: Societe Industrielle de Construction d'Appareils et de Materiel Electriques, 19230 Arnac Pompadour (FR)
(72) Inventeur: LAVERSANE, Hubert, 19230 Troche (FR); GORECKI, Piotr, 24120 Terrasson-Lavilledieu (FR); AREIAS, Stéphane, 19240 Varetz (FR)
(74) Mandataire: Santarelli

(56) Documents cités:
- EP-A1- 1 263 107
- WO-A2-2006/029646
- FR-A1- 2 926 410
- None

## Description

L'invention concerne la pose d'un manchon élastique de protection sur un élément allongé tel qu'un câble électrique ou deux câbles électriques joints l'un à l'autre.

On connaît déjà par la demande de brevet français 2 926 410 un ensemble pour effectuer une telle pose, décrit ci-après en référence aux figures 1 à 6 des dessins annexés. Sur ceux-ci :
- la figure 1 est une vue en coupe longitudinale d'un premier mode de réalisation de cet ensemble ;
- la figure 2 est la vue en coupe transversale repérée par II-II sur la figure 1 ;
- les figure 3 et 4 sont des vues semblables à la figure 1 montrant respectivement un deuxième mode de réalisation et un troisième mode de réalisation de cet ensemble ;
- la figure 5 est une vue semblable à la figure 4, mais avec un élément allongé à recouvrir mis en place à l'intérieur de l'ensemble ; et
- la figure 6 est une vue semblable à la figure 5 mais montrant les noyaux de l'ensemble en cours d'expulsion par le manchon.

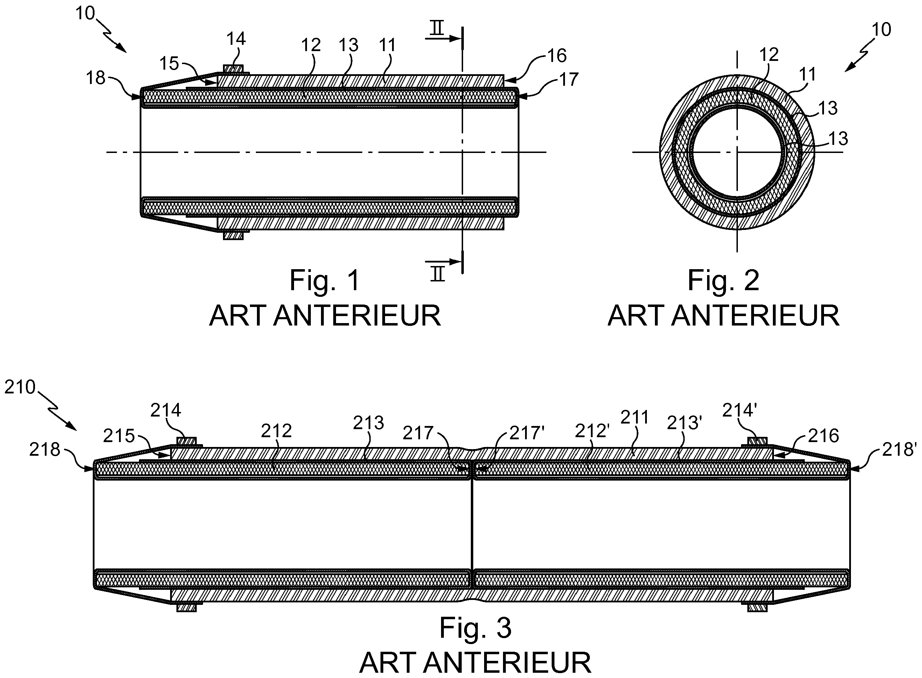

L'ensemble 10 illustré sur la figure 1 comporte un manchon élastique de protection 11, un noyau tubulaire 12, un film 13 à faible coefficient de frottement et un anneau élastique 14 enserrant le film 13 sur la surface externe du manchon 11 afin de l'y fixer.

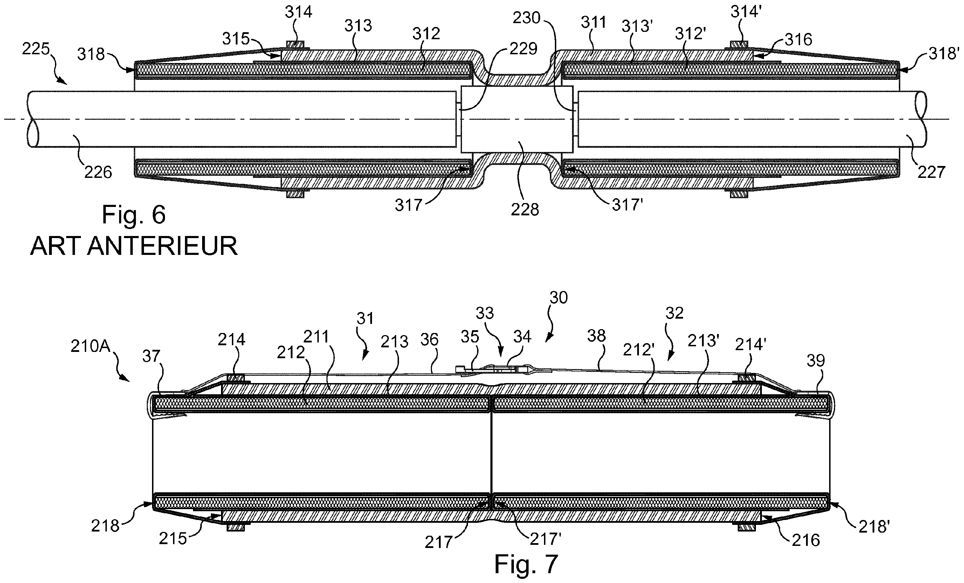

Le manchon 11 est prévu pour recouvrir à enserrement, ainsi que montré partiellement sur la figure 6 pour le manchon semblable 311, un élément allongé tel qu'un tronçon de câble électrique ou deux tronçons de câbles électriques afin de procurer une isolation électrique et une étanchéité à l'air et à l'eau.

Le noyau tubulaire 12 sert à maintenir le manchon 11 en expansion, c'est-à-dire dans un état dilaté radialement par rapport à l'état qu'il adopte en l'absence de contrainte externe. Le noyau 12 est ainsi recouvert à enserrement par le manchon 11. L'espace interne au noyau 12 est configuré pour recevoir intérieurement l'élément allongé qui doit être recouvert par le manchon de protection 11.

Le film 13 à faible coefficient de frottement est interposé entre le manchon 11 et le noyau 12 pour leur permettre de coulisser l'un par rapport à l'autre.

Le noyau 12 peut ainsi coulisser à la fois par rapport à l'élément allongé qui y est mis en place et par rapport au manchon 11 pour que celui-ci vienne recouvrir à enserrement l'élément allongé, ainsi qu'expliqué ultérieurement plus en détail.

Le noyau 12 s'étend au-delà de chacune des extrémités 15 et 16 du manchon 11. L'extrémité 17 du noyau 12 est relativement proche de l'extrémité 16 du manchon 11 située du même côté tandis que l'autre extrémité 18 du noyau 12 est relativement éloignée de l'extrémité 15 du manchon 11 située du même côté.

La proximité des extrémités 16 et 17 est utile pour amorcer de façon simple et commode l'extraction du noyau 12, qui est prévue pour s'effectuer avec le noyau 12 qui est entraîné par rapport au manchon 11 dans le sens qui va de l'extrémité 17 vers l'extrémité 18, ainsi qu'expliqué plus en détail ultérieurement.

Le film 13 est interposé entre le manchon élastique 11 et le noyau 12 sur toute la longueur du manchon 11, c'est-à-dire entre ses extrémités 15 et 16. Le film 13 se prolonge légèrement au-delà de l'extrémité 15. De l'autre côté du manchon 11, le film 13 s'étend au-delà de l'extrémité 16 jusqu'à faire demi-tour sur l'extrémité 17 du manchon 12 située du côté de l'extrémité 16 puis s'étend intérieurement au noyau 12 jusqu'à son autre extrémité 18 sur laquelle il fait demi-tour puis s'étend extérieurement au noyau 12 jusqu'au manchon 11 auquel il est fixé extérieurement par l'anneau élastique 14.

On va maintenant décrire l'ensemble 210 illustré sur la figure 3. D'une façon générale, on a employé les mêmes références numériques que pour l'ensemble 10, mais additionnées du nombre 200.

Dans l'ensemble 210, le noyau 212, le film 213 et l'anneau élastique 214 sont identiques au noyau 12, au film 13 et à l'anneau 14, respectivement.

Le manchon 211 se différencie du manchon 11 uniquement en ce qu'il est sensiblement deux fois plus long.

L'ensemble 210 comporte en outre un second noyau tubulaire 212', un second film à faible coefficient de frottement 213' et un second anneau élastique 214' identiques au noyau 212, au film 213 et à l'anneau 214, respectivement.

Le noyau 212 s'étend au-delà de l'extrémité 215 du manchon 211 de la même manière que le noyau 12 s'étend au-delà de l'extrémité 15 du manchon 11, l'extrémité 218 du noyau 212 étant relativement éloignée de l'extrémité 215 du manchon 211.

Le noyau 212' s'étend lui aussi au-delà de l'extrémité 216 du manchon 211 de la même manière que le noyau 12 s'étend au-delà de l'extrémité 15 du manchon 11, l'extrémité 218' du noyau 212' étant relativement éloignée de l'extrémité 216 du manchon 211.

Le noyau 212 et le noyau 212' sont disposés bout à bout, c'est-à-dire que l'extrémité 217 et l'extrémité 217' sont l'une contre l'autre ou à peu près. On notera que les extrémités 217 et 217' ne sont pas en contact direct, puisqu'elles sont recouvertes respectivement par le film 213 et par le film 213'.

L'extrémité 217 du noyau 212 et l'extrémité 217' du noyau 212' sont situées à peu près au centre du manchon 211.

D'une façon générale, l'agencement du manchon 212', du film 213' et de l'anneau élastique 214' est l'image miroir de l'agencement du noyau 212, du film 213 et de l'anneau 214.

La description qui suit pour le noyau 212, le film 213 et l'anneau 214 vaut également pour le noyau 212', le film 213' et l'anneau 214' à condition d'ajouter un prime aux références les concernant et de remplacer l'extrémité 215 du manchon 211 par l'extrémité 216.

Le film 213 est interposé entre le manchon 211 et le noyau 212 sur toute la longueur où ils sont en contact, c'est-à-dire entre l'extrémité 215 du manchon 211 et l'extrémité 217 du noyau 212.

La disposition du film 213 par rapport au noyau 212 et au manchon 211 entre l'extrémité 217 et l'anneau 214 est exactement la même que la disposition du film 13 entre l'extrémité 17 et l'anneau 14 : le film 213 fait demi-tour sur l'extrémité 217 puis s'étend intérieurement au noyau 212 jusqu'à l'extrémité 218 sur laquelle il fait demi-tour puis il s'étend extérieurement au noyau 212 jusqu'au manchon 211 auquel il est fixé par l'anneau élastique 214.

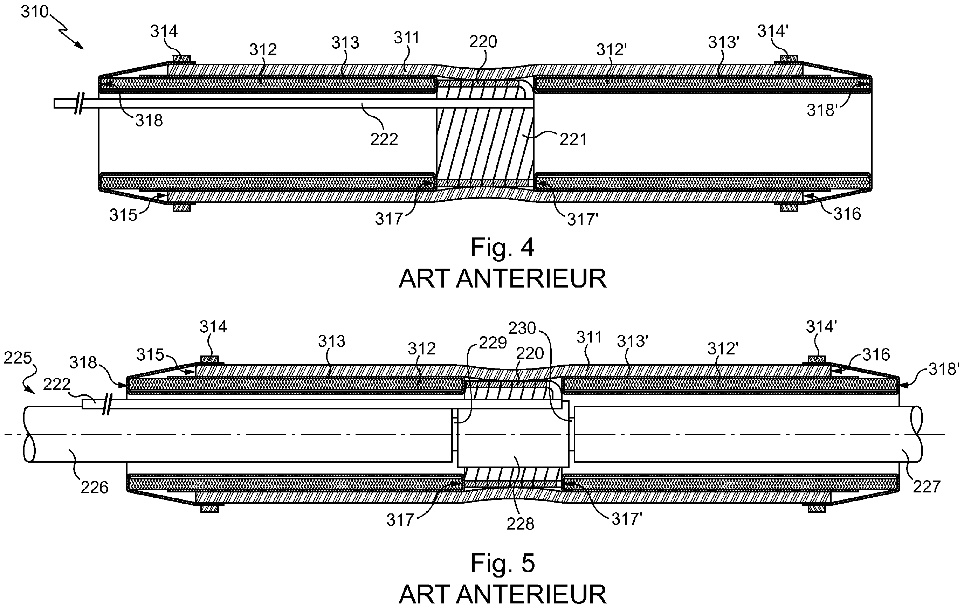

On va maintenant décrire l'ensemble 310 illustré sur la figure 4 puis, à l'appui des figures 5 et 6, la façon dont le manchon 311 que comporte l'ensemble 310 est posé sur un élément allongé. On expliquera ensuite comment s'effectue la pose du manchon 211 de l'ensemble 210 puis comment s'effectue la pose du manchon 11 de l'ensemble 10.

D'une façon générale, on a employé pour l'ensemble 310 les mêmes références numériques que pour l'ensemble 210, mais additionnées du nombre 100.

Dans l'ensemble 310, les noyaux 312 et 312', les films 313 et 313' et les anneaux élastiques 314 et 314' sont identiques aux noyaux 212 et 212', aux films 213 et 213' et aux anneaux 214 et 214', respectivement.

Le manchon 311 se différencie du manchon 211 uniquement en ce qu'il est plus long.

La description donnée ci-dessus pour l'agencement du noyau 212 par rapport au manchon 211 ainsi que pour l'agencement du film 213 par rapport au manchon 211, au noyau 212 et à l'anneau 214 vaut également pour l'agencement du noyau 312 par rapport au manchon 311 ainsi que pour l'agencement du film 313 par rapport au manchon 311, au noyau 312 et à l'anneau 314, à condition de rajouter le nombre 100 aux références numériques de cette description. De même, la description donnée ci-dessus pour l'agencement du noyau 212' par rapport au manchon 211 ainsi que pour l'agencement du film 213' par rapport au manchon 211, au noyau 212' et à l'anneau 214' vaut également pour l'agencement du noyau 312' par rapport au manchon 311 ainsi que pour l'agencement du film 313' par rapport au manchon 311, au noyau 312' et à l'anneau 314', à condition de rajouter le nombre 100 aux références numériques de cette description.

En outre du manchon 311, des noyaux 312 et 312', des films 313 et 313' et des anneaux 314 et 314', l'ensemble 310 comporte une bague frangible 220 ayant en section sensiblement la même forme que les noyaux 312 et 312' entre lesquelles elle est disposée dans leur prolongement à la façon d'une entretoise.

L'extrémité 317 du noyau 312 est contre l'extrémité de la bague 220 que l'on voit à gauche sur la figure 4 et l'extrémité 317' du noyau 312' est contre l'extrémité de la bague 220 que l'on voit à droite sur la figure 4. On notera que les extrémités 317 et 317' ne sont pas en contact direct avec la bague 220 puisque les extrémités 317 et 317' sont recouvertes respectivement par le film 313 et par le film 313'.

La bague 220 est formée par l'enroulement en hélice d'une bande 221 dont les bords sont reliés les uns aux autres de façon déchirable, l'une des extrémités de la bande 221 se trouvant au niveau de l'extrémité de la bague 220 qui est contre le noyau 312 (extrémité de la bague 220 que l'on voit à gauche sur la figure 4), alors qu'à l'autre extrémité de la bague 220 (extrémité que l'on voit à droite sur la figure 4), la bande 221 quitte l'enroulement en hélice et s'étend longitudinalement sous la forme d'une lanière 222 à l'intérieur de la bague 220 puis du noyau 312 jusqu'à dépasser de l'extrémité 318.

L'exercice d'un effort de traction sur l'extrémité de la lanière 222 qui dépasse du noyau 312 permet de débobiner progressivement l'enroulement qui forme la bague 220, à partir de l'extrémité que l'on voit à droite sur la figure 4 jusqu'à son débobinage complet.

La bague 220 peut ainsi être entièrement extraite de l'ensemble 310, y compris lorsqu'un élément allongé est disposé à l'intérieur du noyau 312 et de la bague 220, ainsi que montré sur la figure 5.

En pratique, la bague 220 est formée à partir d'une bande préexistante dont les bords sont légèrement soudés ou la bague 220 est faite à partir d'un tube sur lequel est pratiqué une ligne de prédécoupe en hélice, la lanière 222 venant de matière avec le tube ou étant rapportée sur la matière du tube.

Sur la figure 5 est représenté un élément allongé 225 inséré dans le noyau 312, dans la bague 220 et dans le noyau 312'.

L'élément 225 est formé par deux câbles électriques 226 et 227 disposés bout à bout et par un élément de jonction 228 posé sur des tronçons d'extrémité dénudés 229 et 230 respectivement du câble 226 et du câble 227.

Dans l'exemple illustré, les câbles 226 et 227 ne comportent pas d'autres tronçons d'extrémité accessibles de sorte que l'un des câbles 226 et 227 a d'abord été inséré dans l'ensemble 310, l'élément de jonction 228 a ensuite été posé et l'ensemble 310 a ensuite été positionné comme illustré sur la figure 5, c'est-à-dire avec le manchon 311 positionné longitudinalement par rapport à l'élément allongé 225 à l'emplacement qu'il doit adopter sur cet élément.

Pour que le manchon 311 vienne recouvrir l'élément 225, on tire sur l'extrémité de la lanière 222 qui dépasse du noyau 312 pour débobiner la bague 220 et l'extraire complètement.

Cela permet au manchon 311 de se contracter sur l'élément allongé 225 entre l'extrémité 317 du noyau 312 et l'extrémité 317' du noyau 312', ainsi que montré sur la figure 6.

Cette contraction produit une poussée sur les extrémités 317 et 317' en réaction à laquelle le noyau 312 est entraîné dans le sens qui va de l'extrémité 317 vers l'extrémité 318 tandis que le noyau 312' est entraîné dans le sens qui va de l'extrémité 317' vers l'extrémité 318'. Le mouvement d'entraînement se poursuit jusqu'à ce que les noyaux 312 et 312' soient entièrement expulsés du manchon 311.

Ce dernier recouvre alors à enserrement l'élément allongé 225 auquel il procure, au niveau de l'élément de jonction 228 et de part et d'autre de celui-ci, une isolation électrique et une étanchéité à l'air et à l'eau.

La mise en œuvre de l'ensemble 210 (figure 3) sur un élément allongé tel que 225 est semblable à la mise en œuvre de l'ensemble 310, la seule différence étant que l'opération qui permet au manchon 211 de se contracter sur l'élément allongé entre l'extrémité 217 du noyau 212 et l'extrémité 217' du noyau 212' n'est pas le déchirement de la bague 220 mais une action de mise en mouvement des noyaux 212 et 212' pour les faire coulisser par rapport au manchon 211 respectivement dans le sens de l'extrémité 217 vers l'extrémité 218 et de l'extrémité 217' vers l'extrémité 218'.

La mise en œuvre de l'ensemble 10 (figures 1 et 2) sur un élément allongé tel que 225 est semblable à la mise en œuvre de l'ensemble 210, la seule différence étant que c'est uniquement le noyau 12 qui est mis en mouvement de sorte qu'il coulisse par rapport au manchon 11 dans le sens de l'extrémité 17 vers l'extrémité 18, le manchon 11 se contractant sur l'élément allongé au fur et à mesure que le noyau 12 est expulsé du manchon 11.

Dans une variante non illustrée de l'ensemble 10, le film 13, plutôt que d'être présent sur la totalité du pourtour interne du noyau 12, se subdivise, entre l'extrémité 17 et l'extrémité 18, en deux tronçons se rétrécissant chacun jusqu'à former une bande relativement étroite, chacune des deux bandes faisant demi-tour sur l'extrémité 18 et venant se fixer sur le manchon 11 grâce à la bague élastique 14. L'espace existant entre les deux bandes donne directement accès au noyau 12. L'opérateur peut ainsi saisir le noyau 12, par exemple pour amorcer l'expulsion du noyau 12 hors du manchon 11.

De même, afin que l'opérateur puisse saisir les noyaux 212 et 212' (ou 312 et 312'), il est prévu dans une variante non illustrée que les films 213 et 213' (ou 313 et 313') se subdivisent chacun en deux bandes, ainsi qu'expliqué ci-dessus pour l'ensemble 10.

Dans une autre variante non illustrée, l'ensemble 10, 210 ou 310 présente dans le noyau 12 ou dans les noyaux 212, 212' ou 312, 312', à proximité de l'extrémité 18 ou des extrémités 218, 218' ou 318, 318', un ou plusieurs trous permettant la mise en place d'un crochet pour tirer sur le noyau 12 ou 212, 212' ou 312, 312'.

Un ensemble similaire est également connu de la demande de brevet européen EP1263107. Par ailleurs, on connait par la demande internationale WO 2006/029646 un ensemble semblable comportant des bandes coopérant avec des organes de blocage munis de manivelles pour permettre à l'utilisateur, par action sur les manivelles, de ralentir la vitesse d'expulsion des noyaux, afin d'éviter la formation de défauts dus à la vitesse excessive d'expulsion des noyaux, le contrôle de la vitesse d'expulsion des noyaux permettant d'ajuster cette vitesse à la vitesse de recouvrement du manchon élastique afin que l'affaissement du manchon sur l'élément allongé soit uniforme et dans un seul sens, à savoir du centre vers l'extérieur, pour éviter l'affaissement de portions du manchon en aval de portions non encore affaissées, de sorte qu'il ne se forme pas de poches d'air susceptibles de créer des défauts. Il est également possible à l'utilisateur, par action sur les manivelles, de stopper l'expulsion des noyaux, de préférence dans les premiers instants, pour vérifier, et corriger si besoin, le positionnement axial du manchon vis-à-vis de l'élément allongé.

L'invention vise à fournir un ensemble semblable permettant une pose du manchon simple, commode et précise.

L'invention propose à cet effet un ensemble selon la revendication 1.

Pour effectuer la pose du manchon sur l'élément allongé introduit dans l'espace interne à l'ensemble, on agit sur les noyaux pour amorcer leur expulsion par le manchon.

Grâce au dispositif de maintien, le mouvement des noyaux est arrêté lorsqu'ils sont écartés de la distance prédéterminée.

Pour terminer la pose du manchon, on fait cesser l'action du dispositif de maintien. La poussée exercée par le manchon sur les noyaux du fait de la contraction du manchon entre les premières extrémités des noyaux n'étant plus reprise par le dispositif de maintien, les noyaux sont alors remis en mouvement jusqu'à ce qu'ils soient entièrement expulsés du manchon.

En faisant cesser l'action du dispositif de maintien alors que le manchon est déjà contracté entre les premières extrémités des noyaux, on minimise les risques que le manchon se déplace par rapport à l'élément allongé entre le moment où on a fait cesser l'action du dispositif de maintien et le moment où le manchon commence à enserrer cet élément.

Au cas où le manchon se serait déplacé par rapport à l'élément allongé entre l'état initial de l'ensemble et le moment où le mouvement des noyaux est arrêté par le dispositif de maintien, l'opérateur peut aisément repositionner le manchon, puisque celui-ci n'enserre pas encore l'élément allongé.

La pose du manchon peut ainsi être particulièrement précise, tout en étant simple et commode puisque la mise en œuvre du dispositif de maintien est sans difficultés.

Selon des caractéristiques avantageuses de mise en œuvre de l'ensemble selon l'invention :
- ledit dispositif de maintien s'étend extérieurement au reste dudit ensemble entre deux crochets chacun engagé sur la seconde extrémité d'un des dits noyaux ;
- ledit dispositif de maintien comporte une première sangle, une seconde sangle et une boucle pour assujettir l'une à l'autre la première sangle et la seconde sangle, laquelle boucle comporte un élément mâle faisant partie de la première sangle et un élément femelle faisant partie de la seconde sangle ;
- ladite boucle est configurée pour faire varier la longueur du dispositif de maintien alors que la première sangle et seconde sangle restent assujetties l'une à l'autre par la boucle ;
- ladite boucle est configurée pour admettre une première position dans laquelle le dispositif de maintien présente une première longueur et pour admettre une deuxième position dans laquelle le dispositif de maintien présente une deuxième longueur, plus grande que la première longueur ;
- ledit élément femelle présente une fente allongée, et ledit élément mâle et ledit élément femelle sont configurés pour que ledit élément mâle coulisse le long de ladite fente entre ladite première position et ladite deuxième position de la boucle ;
- ladite première sangle comporte une lanière fixée à l'élément mâle, la largeur de ladite fente et la largeur de ladite lanière étant semblables ;
- ledit élément femelle comporte une tête et un corps qui s'étend à partir de ladite tête, avec ladite fente qui est ménagée dans ledit corps et, entre la fente et la tête, des organes de maintien de l'élément mâle ;
- ledit élément mâle est formé par une plaquette ayant un contour configuré pour passer au travers de ladite fente lorsque ladite plaquette est orientée parallèlement à ladite fente et sinon pour que ladite plaquette ne puisse pas passer au travers de ladite fente ; et/ou
- ladite première sangle comporte, en outre de l'élément mâle, une lanière et un crochet avec l'une des extrémités de la lanière qui est fixée à l'élément mâle et l'autre extrémité de la lanière qui est fixée au crochet ; et la seconde sangle comporte, en outre de l'élément femelle, une lanière et un crochet, avec l'une des extrémités de la lanière qui est fixée à l'élément femelle et l'autre extrémité qui est fixée au crochet.

L'exposé de l'invention sera maintenant poursuivi par la description détaillée d'exemples de réalisation, donnée ci-après à titre illustratif et non limitatif, en référence aux dessins annexés, sur lesquels :
- les figures 1 à 6 illustrent des ensembles antérieurs déjà décrits ci-dessus ;
- la figure 7 est une vue semblable aux figures 1, 3 et 4 mais montrant un ensemble conforme à l'invention ;

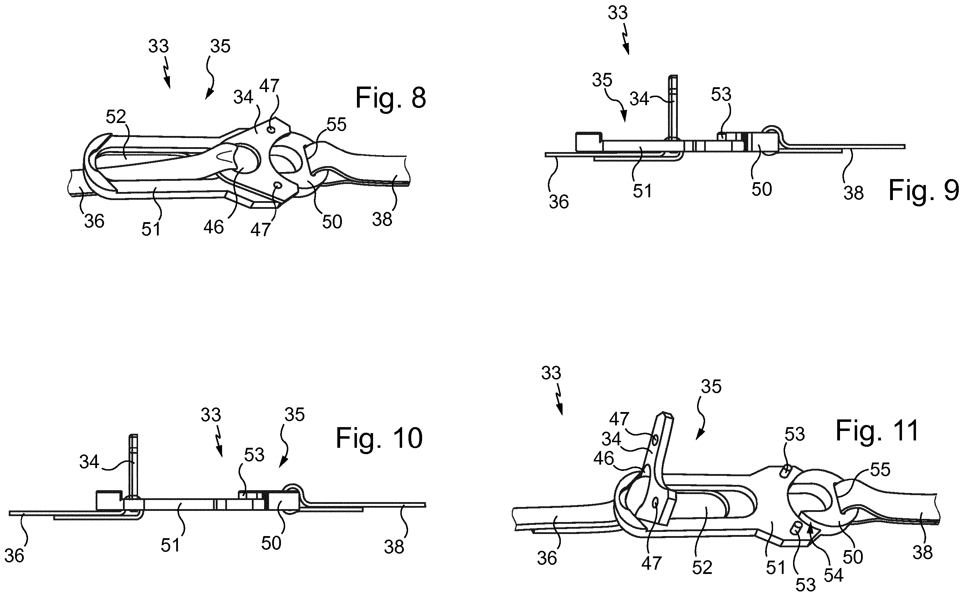

- la figure 8 est une vue en perspective montrant la boucle du dispositif de maintien des noyaux que comporte l'ensemble illustré sur la figure 7;
- la figure 9 est une vue de côté montrant cette boucle dans une position où l'élément mâle vient d'être relevé vis-à-vis de l'élément femelle ;
- la figure 10 est une vue semblable à la figure 9, mais avec l'élément femelle qui a coulissé dans l'élément mâle jusqu'à être en butée ;
- la figure 11 est une vue en perspective montrant la boucle dans la même position que sur la figure 10 ;

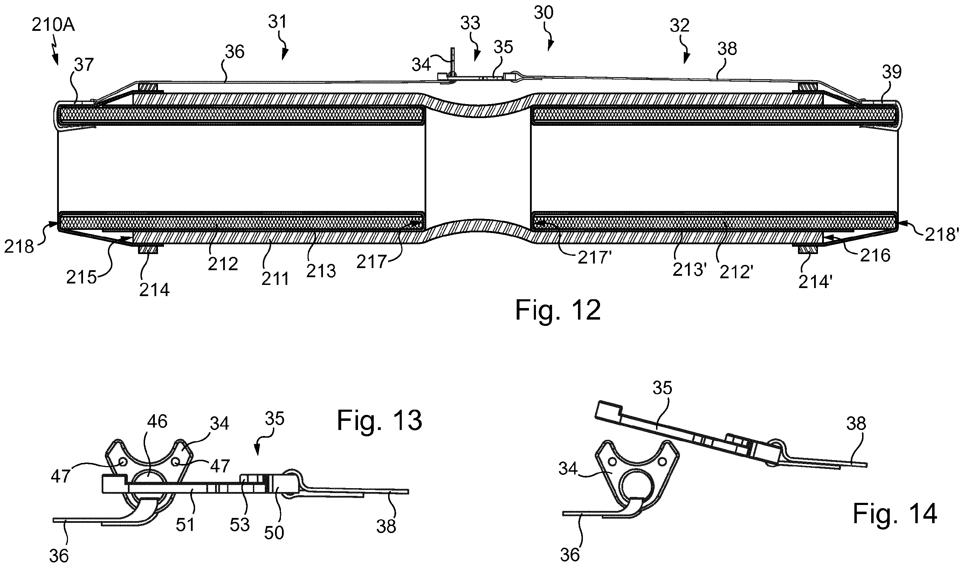

- la figure 12 est une vue semblable à la figure 7, mais montrant l'ensemble selon l'invention dans la configuration qu'il prend lorsque la boucle est dans la position illustrée sur les figures 10 et 11 ; et
- les figures 13 et 14 sont des vues semblables aux figures 9 et 10, mais montrant la boucle respectivement avec l'élément mâle en train d'être glissé au travers de la fente de l'élément femelle pour être dégagé de celui-ci et avec l'élément mâle dégagé de l'élément femelle.

D'une façon générale, l'ensemble 210A selon l'invention illustré sur la figure 7 est semblable à l'ensemble 210 antérieur illustré sur la figure 3, si ce n'est qu'il lui a été ajouté un dispositif 30 de maintien.

Pour simplifier, on a gardé les mêmes références numériques pour les éléments de l'ensemble 210A semblables aux éléments de l'ensemble 210.

Le dispositif 30 sert à maintenir les noyaux 212 et 212'.

Le dispositif de maintien 30 comporte une première sangle 31 et une seconde sangle 32 prévues pour être assujetties l'une à l'autre grâce à une boucle 33 comportant un élément mâle 34 faisant partie de la première sangle 31 et un élément femelle 35 faisant partie de la seconde sangle 32.

En outre de l'élément mâle 34, la première sangle 31 comporte une lanière 36 et un crochet 37. L'une des extrémités de la lanière 36 est fixée à l'élément mâle 34 et l'autre extrémité de la lanière 36 est fixée au crochet 37.

De même, la seconde sangle 32 comporte, en outre de l'élément femelle 35, une lanière 38 et un crochet 39, avec l'une des extrémités de la lanière 38 qui est fixée à l'élément femelle 35 et l'autre extrémité qui est fixée au crochet 39.

Les crochets 37 et 39 sont semblables. Ils ont chacun un profil en U configuré pour se prendre sur le voisinage de l'extrémité 218 ou 218' du noyau 212 ou 212'.

Chaque crochet 37 et 39 présente à son extrémité proximale une ouverture qui sert à la fixation de la lanière 36 ou 38 : cette dernière passe au travers de l'ouverture et revient sur elle-même avec entre les deux portions superposées une couture ou analogue (par exemple une agrafe métallique) pour que les deux portions superposées soient maintenues l'un à l'autre.

Ainsi qu'expliqué plus en détail ultérieurement, la boucle 33 permet de faire varier la longueur du dispositif de maintien 30 alors que la première sangle 31 et la seconde sangle 32 restent assujetties l'une à l'autre par la boucle 33.

On notera que dans le présent mémoire, on entend par la longueur du dispositif de maintien 30 l'écart maximal qui peut exister entre les crochets 37 et 39 lorsqu'ils sont sollicités à s'écarter l'un de l'autre.

Dans une première position de la boucle 33, montrée sur les figures 7 et 8, le dispositif de maintien 30 présente une première longueur.

Dans une deuxième position de la boucle 33, montrée sur les figures 10, 11 et 12, le dispositif de maintien 30 présente une deuxième longueur, plus grande que la première longueur.

Ainsi que montré sur les figures 8 à 11, lors du passage de la première position à la deuxième position de la boucle 33, l'élément mâle 34 et l'élément femelle 35 restent accrochés l'un à l'autre.

Dans l'ensemble 210A, le crochet 37 de la première sangle 31 se prend sur le noyau 212 au voisinage de son extrémité 218, et le crochet 39 de la seconde sangle 32 se prend sur le noyau 212' au voisinage de sa seconde extrémité 218'.

La première longueur du dispositif de maintien 30 (boucle dans la position montrée sur les figures 7 et 8) est sélectionnée pour que les manchons 212 et 212' restent disposés bout à bout, c'est-à-dire avec les extrémités 217 et 217' qui sont l'une contre l'autre ou à peu près.

Ainsi qu'on le comprend bien au vu de la figure 12, du fait que la deuxième longueur du dispositif de maintien 30 est plus grande que la première longueur, les noyaux 212 et 212' ne sont plus bout à bout mais à l'écart l'un de l'autre, et en conséquence le manchon 211 est contracté entre les premières extrémités 217 et 217' des noyaux 212 et 212'.

La deuxième longueur du dispositif de maintien 30 (boucle 33 dans la position montrée sur les figures 10, 11 et 12) est prévue pour que les noyaux 212 et 212' ne puissent pas s'éloigner l'un de l'autre davantage que d'une distance prédéterminée à laquelle le diamètre interne du manchon 211 reste suffisamment grand pour que l'ensemble 210A reste repositionnable sur un élément allongé tel que l'élément 225 (figures 5 et 6).

On notera que l'ensemble 210A reste repositionnable vis-à-vis d'un élément allongé tel que 225 disposé dans l'espace interne à l'ensemble 210A, tant que le diamètre interne du manchon 211 reste au moins semblable au diamètre interne des noyaux 212 et 212'.

En effet, ainsi, le manchon 211 ne présente pas de saillie ou une saillie minime dans l'espace interne aux noyaux 212 et 212' ; et par conséquent le manchon 211 ne gêne pas le coulissement de l'ensemble 210A vis-à-vis de l'élément allongé tel que 225.

Pour terminer la pose du manchon 211 sur l'élément allongé tel que 225 disposé dans l'espace interne à l'ensemble 210A, on fait cesser l'action du dispositif de maintien 30, ici en libérant l'élément mâle 34 et l'élément femelle 35 l'un par rapport à l'autre, ainsi qu'expliqué plus en détail ultérieurement à l'appui des figures 13 et 14, pour que les sangles 31 et 32 ne soient plus assujetties l'une à l'autre.

Le dispositif de maintien 30 ne reprend alors plus la poussée exercée par le manchon 211 sur les noyaux 212 et 212' du fait de la contraction du manchon 211 entre les extrémités 217 et 217'.

Le noyau 212 est donc entraîné dans le sens qui va de l'extrémité 217 vers l'extrémité 218 et le noyau 212' est entraîné dans le sens qui va de l'extrémité 217' vers l'extrémité 218'.

L'entraînement des noyaux 212 et 212' par le manchon 211 se poursuit jusqu'à ce que les noyaux 212 et 212' soient entièrement expulsés du manchon 211.

On notera qu'en faisant cesser l'action du dispositif de maintien 30 alors que le manchon 211 est déjà contracté entre les extrémités 217 et 217', on minimise les risques que le manchon 211 se déplace par rapport à l'élément allongé tel que 225 entre le moment où on a fait cesser l'action du dispositif de maintien 30 et le moment où le manchon 211 commence à enserrer cet élément.

On observera qu'avec l'ensemble 210 illustré sur la figure 3, on libère les noyaux 212 et 212' directement à partir de leur position initiale où ils sont bout à bout. Les noyaux 212 et 212' se déplacent donc de façon relativement importante entre le début de l'expulsion des noyaux et le moment où le manchon 211 commence à se contracter sur l'élément allongé tel que 225.

Il y a donc des risques de déplacement de l'ensemble 210 vis-à-vis de l'élément allongé tel que 225 entre le début de l'expulsion des noyaux 212 et 212' et le moment où le manchon 211 commence à se contracter sur l'élément allongé tel que 225.

Si un tel déplacement du manchon 211 se produit, il n'y a pas de possibilité de le compenser en repositionnant l'ensemble 210, étant donné que le manchon enserre déjà l'élément allongé tel que 225.

Au contraire, dans l'ensemble 210A, le maintien entre les deux noyaux 212 et 212' procuré par le dispositif 30 permet de repositionner le manchon 211 vis-à-vis de l'élément allongé tel que 225 si un déplacement du manchon 211 s'est produit lorsque le manchon 211 s'est contracté entre les extrémités 217 et 217'.

Bien évidemment, le manchon 211 peut également être repositionné si une autre raison fait que dans la configuration illustrée sur la figure 12, le manchon 211 n'est pas correctement positionné vis-à-vis de l'élément allongé tel que 225.

On notera que dans l'ensemble 210A, il n'est pas nécessaire que les noyaux 212 et 212' soient expulsés simultanément.

Au contraire, on peut d'abord procéder à l'expulsion d'un seul des noyaux 212 et 212' avec l'aide du dispositif de maintien 30, et ensuite procéder à l'expulsion de l'autre noyau.

On observera au surplus que dans l'ensemble 310, la mise en œuvre de la bague frangible 220, qui implique la lanière 222 disposée dans l'espace interne à l'ensemble 210, demande une certaine dextérité de l'opérateur et impose de laisser un espace relativement important autour de l'élément allongé tel que 225.

Au contraire, dans l'ensemble 210A, le dispositif 30 est placé à l'extérieur (seule l'extrémité distale des crochets 37 et 39 est dans l'espace interne à l'ensemble 210A) ; et la mise en œuvre du dispositif de maintien 30 s'effectue par l'extérieur. Par conséquent, l'élément allongé tel que 225 peut avoir un encombrement externe très proche du diamètre interne des noyaux 212 et 212'.

On va maintenant décrire en détail la boucle 33 du dispositif de maintien 30.

L'élément mâle 34 de la boucle 33 est formé par une plaquette présentant un contour globalement en croissant. Dans cette plaquette est ménagée une ouverture centrale 46 de diamètre relativement important et deux orifices 47 de diamètre relativement petit, chacun situé à proximité d'une extrémité.

L'ouverture centrale 46 sert à la fixation entre l'élément mâle 34 et la lanière 36 : cette dernière passe au travers de l'ouverture 46 et revient sur elle-même avec entre les deux portions superposées une couture ou analogue (par exemple une agrafe métallique) pour que les deux portions superposées soient maintenues l'une à l'autre.

Les orifices 47 sont prévus pour recevoir des tétons 53 de l'élément femelle 35 afin de maintenir la boucle 33 dans sa première position montrée sur les figures 7 et 8.

L'élément femelle 35 de la boucle 33 comporte une tête 50 et un corps 51 qui s'étend à partir de la tête 50.

Le corps 51 présente une fente allongée 52 dont la largeur correspond à celle de la lanière 36. La largeur de la fente 52 est par ailleurs plus grande que l'épaisseur de la plaquette qui forme l'élément mâle 34.

Entre la fente 52 et la tête 50, le corps 51 présente deux tétons 53.

La surface dont saillent les tétons 53 et les surfaces qui longent la fente 52 sont à fleur les unes des autres.

A la jonction entre le corps 51 et la tête 50, l'élément femelle 35 présente un épaulement 54 (figure 11).

La tête 50 présente une ouverture 55.

L'ouverture 55 sert à la fixation entre l'élément femelle 35 et la lanière 38 : cette dernière passe au travers de l'ouverture 55 et revient sur elle-même avec entre les deux portions superposées une couture ou analogue (par exemple une agrafe métallique) pour que les deux portions superposées soient maintenues l'une à l'autre.

Dans la première position de la boucle 33 (figures 7 et 8), la lanière 36 passe au travers de la fente 52 et la plaquette qui forme l'élément mâle 34 est contre la surface de l'élément femelle 35 dont saillent les tétons 53, avec chaque orifice 47 qui reçoit l'un des tétons. La partie concave du contour de la plaquette qui forme l'élément mâle 34 est contre l'épaulement 54, qui est de forme complémentaire.

Pour associer l'élément mâle 34 et l'élément femelle 35 afin de mettre la boucle 33 dans la première position (figures 7 et 8), on fait passer dans la fente 52 la plaquette qui forme l'élément mâle 34, bien entendu en orientant cette plaquette parallèlement à la fente 52, ensuite l'on change l'orientation de la plaquette d'un quart de tour pour la mettre à plat sur la partie du corps 51 situé entre la fente 52 et la tête 50, en engageant chaque téton 53 dans un orifice 47 respectif.

Cet engagement est légèrement serré, de sorte que l'élément mâle et l'élément femelle restent associés l'un à l'autre.

Les éventuels efforts de traction exercés sur la boucle 33 par les lanières 36 et 38 sont repris grâce aux tétons 53 engagés dans les orifices 47, qui sont orientés transversalement à ces efforts.

Pour faire passer la boucle 33 de la première position (figures 7 et 8) à la deuxième position (figures 10 à 12), on relève l'élément mâle 34 comme montré sur la figure 9, c'est-à-dire qu'on le fait passer de son orientation à plat sur la surface dont saillent les tétons 53 à une orientation où il est dressé vis-à-vis de cette surface.

L'élément mâle 34 est ainsi libéré des tétons 53 mais il ne peut passer au travers de la fente 52 car il est plus large que celle-ci.

Si un effort de traction s'exerce sur les lanières 36 et 38, par exemple si les noyaux 212 et 212' commencent à être expulsés du manchon 211, l'élément mâle 34 et la lanière 36 coulissent par rapport à l'élément femelle 35 en étant guidés par le pourtour de la fente 52 jusqu'à la position de butée montrée sur les figures 10 à 12, où l'élément mâle 34 et la lanière 36 sont à l'extrémité de la fente 52 la plus éloignée de la tête 50.

Pour libérer l'élément mâle 34 de l'élément femelle 35, on fait faire un quart de tour à l'élément mâle 34 pour qu'il soit orienté parallèlement à la fente 52. L'élément mâle 34 peut alors passer au travers de la fente 52, ainsi que montré sur les figures 13 et 14.

Le dispositif de maintien 30 se met en place sur le reste de l'ensemble 210A avec la boucle 33 qui est dans la deuxième position (figures 10 à 12) et donc le dispositif de maintien 30 qui peut prendre la deuxième longueur, de sorte que la mise en place des crochets 37 et 39 sur les extrémités 218 et 218' des noyaux 212 et 212' est possible. Ensuite, le dispositif de maintien 30 est tendu en mettant la boucle 33 dans la première position (figures 7 et 8).

Dans des variantes non illustrées :
- les dimensions et la conformation du manchon tel que 211, du noyau tel que 212 ou 212', ou du film tel que 213 ou 213' sont différentes, par exemple le manchon élastique comporte extérieurement des ailettes globalement tronconiques lorsqu'il est posé sur un élément allongé tel que 225 ;
- le film de glissement tel que 213 ou 213' est autre qu'un film à faible coefficient de frottement, par exemple un filet tubulaire comme décrit dans la demande de brevet français 2 945 675 ;
- l'agencement des films de glissement est différent, par exemple ils ne viennent pas se prendre sur les extrémités du manchon et/ou coopèrent avec un lien élastique ainsi que décrit dans la demande de brevet français 2 791 480 ;
- l'élément mâle tel que 34 a une autre conformation, par exemple en T ou en papillon ;
- l'élément femelle tel que 35 a une autre conformation, par exemple avec des organes de maintien de l'élément femelle que sont différents de tétons tels que 53, par exemple une patte d'encliquetage ; et/ou
- le dispositif de maintien 30 est agencé différemment, par exemple avec une seule lanière entre l'élément mâle et l'élément femelle, prévue pour passer dans l'espace interne à l'élément tel que 210A.

De nombreuses autres variantes sont possibles en fonction de circonstance, et l'on rappelle à cet égard que l'invention ne se limite pas aux exemples décrits et représentés.

## Revendications

1. Ensemble pour recouvrir à enserrement un élément allongé (225) de dimensions prédéterminées avec un manchon élastique de protection (211), comportant :
- ledit manchon (211) ;
- deux noyaux tubulaires (212, 212') de maintien en expansion dudit manchon (211), disposés bout à bout, recouverts à enserrement par ledit manchon, configurés pour recevoir intérieurement ledit élément allongé (225), chaque dit noyau tubulaire (212, 212') s'étendant entre une première extrémité (217, 217') et une seconde extrémité (218, 218') avec les premières extrémités (217, 217') qui sont en regard l'une de l'autre ;
- pour chaque noyau tubulaire (212, 212'), un film de glissement (213, 213') interposé entre ledit manchon (211) et ledit chaque noyau (212, 212'), pour permettre à chaque noyau de coulisser par rapport audit manchon;
et
- un dispositif de maintien des deux noyaux configuré pour que les deux noyaux puissent s'éloigner l'un de l'autre à partir de l'état initial où ils sont bout à bout puis être arrêtés ;
ledit ensemble (210A) étant **caractérisé en ce que** ledit dispositif (30) de maintien des deux noyaux (212, 212') est configuré pour que lesdits noyaux (212, 212') puissent s'éloigner l'un de l'autre, à partir dudit état initial où ils sont bout à bout, jusqu'à être éloignées au maximum d'une distance prédéterminée, ledit dispositif de maintien (30) étant configuré pour que le mouvement des deux noyaux (212, 212') soit arrêté par le dispositif de maintien (30) lorsque les noyaux (212, 212') sont éloignés de ladite distance prédéterminée, à laquelle le diamètre interne du manchon (211) entre les premières extrémités (217, 217') est au moins semblable au diamètre interne des noyaux (212, 212'), grâce à quoi ledit ensemble (210A) avec les deux noyaux (212, 212') ainsi éloignés reste repositionnable ; ledit dispositif de maintien (30) étant configuré pour qu'on puisse faire cesser son action d'arrêt du mouvement des noyaux (212, 212') lorsqu'ils sont éloignés de ladite distance prédéterminée.

2. Ensemble selon la revendication 1, **caractérisé en ce que** ledit dispositif de maintien (30) s'étend extérieurement au reste dudit ensemble (210A) entre deux crochets (37, 39) chacun engagé sur la seconde extrémité (218, 218') d'un des dits noyaux (212, 212').

3. Ensemble selon l'une quelconque des revendications 1 ou 2, **caractérisé en ce que** ledit dispositif de maintien (30) comporte une première sangle (31), une seconde sangle (32) et une boucle (33) pour assujettir l'une à l'autre la première sangle (31) et la seconde sangle (32), laquelle boucle (33) comporte un élément mâle (34) faisant partie de la première sangle (31) et un élément femelle (35) faisant partie de la seconde sangle (32).

4. Ensemble selon la revendication 3, **caractérisé en ce que** ladite boucle (33) est configurée pour faire varier la longueur du dispositif de maintien (30) alors que la première sangle (31) et seconde sangle (32) restent assujetties l'une à l'autre par la boucle (33).

5. Ensemble selon la revendication 4, **caractérisé en ce que** ladite boucle (33) est configurée pour admettre une première position dans laquelle le dispositif de maintien (30) présente une première longueur et pour admettre une deuxième position dans laquelle le dispositif de maintien (30) présente une deuxième longueur, plus grande que la première longueur.

6. Ensemble selon la revendication 5, **caractérisé en ce que** ledit élément femelle (35) présente une fente allongée (52), et ledit élément mâle (34) et ledit élément femelle (35) sont configurés pour que ledit élément mâle (34) coulisse le long de ladite fente (52) entre ladite première position et ladite deuxième position de la boucle (33).

7. Ensemble selon la revendication 6, **caractérisé en ce que** ladite première sangle (31) comporte une lanière (36) fixée à l'élément mâle (34), la largeur de ladite fente (52) et la largeur de ladite lanière (36) étant semblables.

8. Ensemble selon l'une quelconque des revendications 6 ou 7, **caractérisé en ce que** ledit élément femelle (35) comporte une tête (50) et un corps (51) qui s'étend à partir de ladite tête (50), avec ladite fente (52) qui est ménagée dans ledit corps (51) et, entre la fente (52) et la tête (50), des organes (53) de maintien de l'élément mâle (34).

9. Ensemble selon l'une quelconque des revendications 6 à 8 **caractérisé en ce que** ledit élément mâle (34) est formé par une plaquette ayant un contour configuré pour passer au travers de ladite fente (52) lorsque ladite plaquette est orientée parallèlement à ladite fente et sinon pour que ladite plaquette ne puisse pas passer au travers de ladite fente.

10. Ensemble selon l'une quelconque des revendications 3 à 9 **caractérisé en ce que** la première sangle (31) comporte, en outre de l'élément mâle (34), une lanière (36) et un crochet (37) avec l'une des extrémités de la lanière (36) qui est fixée à l'élément mâle (34) et l'autre extrémité de la lanière (36) qui est fixée au crochet (37) ; et la seconde sangle (32) comporte, en outre de l'élément femelle (35), une lanière (38) et un crochet (39), avec l'une des extrémités de la lanière (38) qui est fixée à l'élément femelle (35) et l'autre extrémité qui est fixée au crochet (39).

## Patentansprüche

1. Anordnung zum einklemmenden Abdecken eines länglichen Elements (225) mit vorbestimmten Abmessungen mittels einer elastischen Schutzhülse (211), enthaltend:
- die Hülse (211);
- zwei röhrenförmige Kerne (212, 212') zum Halten der Hülse (211) im aufgeweiteten Zustand, die auf Stoß angeordnet sind, von der Hülse einklemmend abgedeckt werden und dazu ausgelegt sind, das längliche Element (225) innen aufzunehmen, wobei sich jeder röhrenförmige Kern (212, 212') zwischen einem ersten Ende (217, 217') und einem zweiten Ende (218, 218') erstreckt, wobei die ersten Enden (217, 217') einander zugewandt sind;
- für jeden röhrenförmigen Kern (212, 212') einen Gleitfilm (213, 213'), der zwischen der Hülse (211) und jedem Kern (212, 212') eingefügt ist, so dass der Kern jeweils relativ zu der Hülse gleitbeweglich ist; und
- eine Vorrichtung zum Halten der beiden Kerne, die so ausgelegt ist, dass die beiden Kerne sich aus dem Ausgangszustand, in dem sie auf Stoß liegen, voneinander weg bewegen können und dann angehalten werden können;
wobei die Anordnung (210A) **dadurch gekennzeichnet ist, dass** die Vorrichtung (30) zum Halten der beiden Kerne (212, 212') so ausgelegt ist, dass die Kerne (212, 212') sich aus dem Ausgangszustand, in dem sie auf Stoß liegen, voneinander weg bewegen können, bis sie höchstens um einen vorbestimmten Abstand voneinander beabstandet sind, wobei die Haltevorrichtung (30) so ausgelegt ist, dass die Bewegung der beiden Kerne (212, 212') mittels der Haltevorrichtung (30) dann angehalten wird, wenn die Kerne (212, 212') um den vorbestimmten Abstand beabstandet sind, bei dem der Innendurchmesser der Hülse (211) zwischen den ersten Enden (217, 217') zumindest ähnlich wie der Innendurchmesser der Kerne (212, 212') ist, wodurch die Anordnung (210A) mit den beiden so beabstandeten Kernen (212, 212') verstellbar bleibt; wobei die Haltevorrichtung (30) dazu ausgelegt ist, dass deren Wirkung zum Anhalten der Bewegung der Kerne (212, 212') ausgesetzt werden kann, wenn sie um den vorbestimmten Abstand voneinander beabstandet sind.

2. Anordnung nach Anspruch 1,
**dadurch gekennzeichnet, dass**
sich die Haltevorrichtung (30) außerhalb der restlichen Anordnung (210A) zwischen zwei Haken (37, 39) erstreckt, die jeweils am zweiten Ende (218, 218') einer der Kerne (212, 212') angreifen.

3. Anordnung nach einem der Ansprüche 1 oder 2,
**dadurch gekennzeichnet, dass**
die Haltevorrichtung (30) einen ersten Gurt (31), einen zweiten Gurt (32) und eine Schnalle (33) zum Befestigen des ersten Gurts (31) und des zweiten Gurts (32) aneinander aufweist, wobei die Schnalle (33) ein Einsteckelement (34), das zu dem ersten Gurt (31) gehört, und ein Buchsenelement (35), das zu dem zweiten Gurt (32) gehört, enthält.

4. Anordnung nach Anspruch 3,
**dadurch gekennzeichnet, dass**
die Schnalle (33) dazu ausgelegt ist, die Länge der Haltevorrichtung (30) zu verändern, während der erste Gurt (31) und der zweite Gurt (32) über die Schnalle (33) aneinander befestigt bleiben.

5. Anordnung nach Anspruch 4,
**dadurch gekennzeichnet, dass**
die Schnalle (33) dazu ausgelegt ist, eine erste Position zuzulassen, in der die Haltevorrichtung (30) eine erste Länge aufweist, und eine zweite Position zuzulassen, in der die Haltevorrichtung (30) eine zweite Länge aufweist, die größer ist als die erste Länge.

6. Anordnung nach Anspruch 5,
**dadurch gekennzeichnet, dass**
das Buchsenelement (35) einen länglichen Schlitz (52) aufweist und dass das Einsteckelement (34) und das Buchsenelement (35) so ausgelegt sind, dass das Einsteckelement (34) entlang des Schlitzes (52) zwischen der ersten Position und der zweiten Position der Schnalle (33) verschiebbar ist.

7. Anordnung nach Anspruch 6,
**dadurch gekennzeichnet, dass**
der erste Gurt (31) ein am Einsteckelement (34) fixiertes Verbindungsband (36) aufweist, wobei die Breite des Schlitzes (52) und die Breite des Verbindungsbandes (36) ähnlich sind.

8. Anordnung nach einem der Ansprüche 6 oder 7,
**dadurch gekennzeichnet, dass**
das Buchsenelement (35) einen Kopf (50) und einen sich von dem Kopf (50) weg erstreckenden Körper (51) aufweist, wobei der Schlitz (52) in dem Körper (51) vorgesehen ist und zwischen dem Schlitz (52) und dem Kopf (50) Mittel (53) zum Halten des Einsteckelements (34) vorgesehen sind.

9. Anordnung nach einem der Ansprüche 6 bis 8,
**dadurch gekennzeichnet, dass**
das Einsteckelement (34) aus einer Platte gebildet ist, die mit ihrem Umriss dazu ausgelegt ist, durch den Schlitz (52) hindurchzutreten, wenn die Platte parallel zu dem Schlitz ausgerichtet ist, und andernfalls die Platte nicht durch den Schlitz hindurchtreten kann.

10. Anordnung nach einem der Ansprüche 3 bis 9,
**dadurch gekennzeichnet, dass**
der erste Gurt (31) zusätzlich zu dem Einsteckelement (34) ein Verbindungsband (36) und einen Haken (37) aufweist, wobei das eine Ende des Verbindungsbandes (36) an dem Einsteckelement (34) und das andere Ende des Verbindungsbandes (36) an dem Haken (37) fixiert ist; und der zweite Gurt (32) zusätzlich zu dem Buchsenelement (35) ein Verbindungsband (38) und einen Haken (39) aufweist, wobei das eine Ende des Verbindungsbandes (38) an dem Buchsenelement (35) und das andere Ende an dem Haken (39) fixiert ist.

## Claims

1. An assembly for tightly covering an elongate member (225) of predetermined dimensions with an elastic protection sleeve (211), comprising:
- said sleeve (211);
- two tubular cores (212, 212') for holding expanded said sleeve (211), which are disposed end to end, covered tightly by said sleeve, and configured to receive internally said elongate member (225), each said tubular core (212, 212') extending between a first end (217, 217') and a second end (218, 218'), said first ends (217, 217') facing each other;
- for each tubular core (212, 212'), a slide film (213, 213') placed between said sleeve (211) and said each core (212, 212'), to enable each core to slide relative to said sleeve; and
- a device for holding the two cores configured for the two cores be able to move apart from each other from the initial state in which they are end to end then be stopped ;
said assembly (210A) being **characterized in that** said device (30) for holding the two cores (212, 212') is configured for the two cores be able to move apart from each other, from the initial state in which they are end to end, until they are apart at most by a predetermined distance, said device (30) for holding the two cores (212, 212') being configured so that the movement of the cores (212, 212') can be stopped by the device for holding (30) when the two cores are spaced apart by said predetermined distance, at which the inside diameter of the sleeve (211) between the first ends (217, 217') is at least similar to the inside diameter of the cores (212, 212'), whereby said assembly (210A) with the two cores (212, 212') thus apart can still be repositioned; said device for holding (30) being configured for one can make cease its stopping action of the movement of the cores (212, 212') when the two cores are spaced apart by said predetermined distance.

2. An assembly according to claim 1, **characterized in that** said holding device (30) extends externally of the rest of said assembly (210A) between two hooks (37, 39) each engaged on the second end (218, 218') of one of said cores (212, 212').

3. An assembly according to any one of claims 1 or 2, **characterized in that** said holding device (30) comprises a first belt (31), a second belt (32) and a buckle (33) to fasten together the first belt (31) and the second belt (32), which buckle (33) comprises a male member (34) forming part of the first belt (31) and a female member (35) forming part of the second belt (32).

4. An assembly according to claim 3, **characterized in that** said buckle (33) is configured to vary the length of the holding device (30) when the first belt (31) and the second belt (32) remain fastened to each other by the buckle (33).

5. An assembly according to claim 4, **characterized in that** said buckle (33) is configured to have a first position in which the holding device (30) has a first length and to have a second position in which the holding device (30) has a second length, greater than the first length.

6. An assembly according to claim 5, **characterized in that** said female member (35) has an elongate slot (52), and said male member (34) and said female member (35) are configured in order for said male member (34) to slide along said slot (52) between said first position and said second position of the buckle (33).

7. An assembly according to claim 6, **characterized in that** said first belt (31) comprises a strap (36) fastened to the male member (34), the width of said slot (52) and the width of said strap (36) being similar.

8. An assembly according to any one of claims 6 or 7, **characterized in that** said female member (35) comprises a head (50) and a body (51) which extends from said head (50), said slot (52) being formed in said body (51) and, between the slot (52) and the head (50), holding members (53) for the male member (34).

9. An assembly according to any one of claims 6 to 8, **characterized in that** said male member (34) is formed by a plate having a contour configured to pass through said slot (52) when said plate is oriented parallel to said slot and otherwise in order for said plate not to be able to pass through said slot.

10. An assembly according to any one of claims 3 to 9, **characterized in that** the first belt (31) comprises, in addition to the male member (34), a strap (36) and a hook (37), one of the ends of the strap (36) being fastened to the male member (34) and the other end of the strap (36) being fastened to the hook (37); and the second belt (32) comprises, in addition to the female member (35), a strap (38) and a hook (39), one of the ends of the strap (38) being fastened to the female member (35) and the other end being fastened to the hook (39).
